# EUROPÄISCHE PATENTSCHRIFT

(11) **EP 2 404 887 B1**
(45) Veröffentlichungstag und Bekanntmachung des Hinweises auf die Patenterteilung: **21.08.2013**
(21) Anmeldenummer: 11169122.6
(22) Anmeldetag: 08.06.2011
(51) Int. Cl.: C05C 3/00, C05F 5/00

(54) **Verfahren zur Düngemittelproduktion aus Gärrest, anfallend in Biogasanlagen, und Einrichtung zur Realisierung des Verfahrens**
Method for producing fertilizer from fermentation residue in biogas assemblies and installation for implementing the method
Procédé de production d'engrais à partir de résidus de fermentation survenant sur des installations de biogaz et dispositif de réalisation du procédé

(30) Priorität: 07.07.2010 DE 102010031069
(43) Veröffentlichungstag der Anmeldung: 11.01.2012
(73) Patentinhaber: Hartmann, Steffen, 06507 Allrode (DE)
(72) Erfinder: Hartmann, Steffen, 06507 Allrode / Harz (DE)
(74) Vertreter: Gulde Hengelhaupt Ziebig & Schneider

(56) Entgegenhaltungen:
- EP-A2- 1 923 378
- WO-A2-2006/105875
- DE-A1-102007 004 892
- DE-A1-102009 027 274

## Beschreibung

Die Erfindung betrifft ein Verfahren zur Düngemittelproduktion aus Gärrest, anfallend in Biogasanlagen, und eine Einrichtung zur Realisierung des Verfahrens.

Die Weiterverarbeitung von Gärrest aus Biogasanlagen ist weithin ein ungelöstes Problem. So sind Bandfilter der Firma SEVAR Anlagentechnik GmbH bekannt, mit denen bereits vorgetrocknetes Gut noch einer weiteren Trocknung unterzogen wird. Sie sind für flüssigen Gärrest, aus konstruktiver Sicht, nicht verwendbar. Zudem hat ein Bandfilter den Nachteil, dass Ammoniak ausgetrieben wird und die Abluft gewaschen werden muss. Ferner lösen sich bei der Trocknung kleine Partikel, die umherwirbeln und die Kanäle des Filters verstopfen.

Weiterhin ist ein Verdampfer bekannt, bei welchem Gärrest bearbeitet wird und dabei anzusäuern ist. Dadurch gast Kohlendioxid aus. Dieser Ausgasungsvorgang wird in einem Entgaser durchgeführt, wobei der Gärrest dann in einen Plattenwärmetauscher gegeben wird. Der Plattenwärmetauscher kann aufgrund weiterer Ausgasungen jedoch nur mit halber Kapazität betrieben werden.

Wenn ein derartiger Plattenwärmetauscher in Abständen still zusetzen und mit z. Bsp. Natronlauge zu reinigen ist, so muss dies ca. alle 7 Stunden geschehen, was hohe Kosten, allein für die einzusetzenden Chemikalien, nach sich zieht.

Schließlich soll auf ein Verfahren der Firma GNS Gesellschaft für nachhaltige Stoffnutzung GmbH hingewiesen werden, bei dem unter Vakuum Ammoniak gestrippt werden soll. Das Ammoniak wird sodann durch eine Calciumsulfat-Suspension geleitet, so dass Ammoniumsulfat und Calciumcarbonat produziert werden sollen. Für diesen Vorgang muss unbedingt als Zugabe CO₂ mit in dieses Verfahren eingebunden werden, was jedoch in dem dokumentierten Verfahren offensichtlich nicht vorgesehen ist.

Das Kondensat aus vergleichbaren Verfahren besitzt einen hohen Anteil an Stickstoff, so dass es nicht in die Vorflut einleitbar ist und im gegebenen Fall einer weiteren Behandlung bedürfte.

Mit DE 10 2007 004 892 A1 sind ein Verfahren und eine Vorrichtung zur Aufbereitung organischer Reststoffe aus Biogasanlagen bekannt geworden. Hier wird während einer Biogasgenerierung in einem Fermenter aus organischen Reststoffen ein Gärrest als Zwischenprodukt gewonnen, der mechanisch aufbereitet, d. h. eingedickt wird, wonach ein erster Teil eines flüssigen Gärrestes eine Eindampfung zur Produktion von Kopfdünger und ein zweiter Teil des eingedickten Gärrestes eine Trocknung zur Produktion von Fußdünger durchläuft, indem dem Teilstrom der Fußdüngerproduktion ein Massenstrom des Kopfdünger-Konzentrates zugeführt wird. Damit wird Gärrest entweder zur Energiegewinnung vergast oder als landwirtschaftlicher Dünger genutzt.

Nach EP 1 923 378 A2 können ein Verfahren zur Aufbereitung von Gärresten und eine Vorrichtung zur Gewinnung von Dünger vorgestellt werden. Das über die erfindungswesentlichen Teile Separator, beheizbare Rohrleitung, Reaktionsbehälter, Wärmetauscher, Vorlagegefäß, Rührwerk, Vakuumpumpe und Absetzbehälter realisierbare Verfahren durchläuft dabei im wesentlichen folgende Schritte:
a) Abtrennen von Feststoffen aus z. B. einer Gülle,
b) separate Verarbeitung einer Feststoff-Komponente und einer flüssigen Komponente,
c) thermische Behandlung der flüssigen Komponente bei Durchmischung der biologischen Komponente und unter Zugabe einer Gips-Suspension bei definierter Temperatur und einem Vakuum,
d) Absetzen der in c) gebildeten Feststoffe und Aufkonzentrierung der flüssigen Phase bei Temperaturzuführung bis zu 90° und bei entsprechendem Vakuum sowie
e) separate Ausbringung des während der Verdampfung gebildeten Kondensates und Abtrennung verbliebenen Konzentrates.

Die beiden letztgenannten Lösungen bedienen sich eines vergleichsweise hohen apparativen Aufwandes und es ist bei diesen nicht vorgesehen, dass neben einem streufähigen Dünger auch ein flüssiger Dünger produziert wird bzw. beide Komponenten, miteinander durchmischt, verwendet werden.

Nach diesen beispielhaft geschilderten Lösungen ist erkennbar, dass die gefundenen Nachteile des bekannten Standes der Technik überwunden werden müssen.

Es ist daher Aufgabe der Erfindung, ein Verfahren und eine Einrichtung zur Realisierung des Verfahrens vorzuschlagen, wodurch Gärrest aus Biogasanlagen mindestens in 2 Verdampferstufen und mittels einer dazwischen geschalteten Kondensationsstufe derart nutzbringend aufkonzentriert werden soll, dass ein streufähiger Dünger aus einer zweiten Verdampferstufe, ein flüssiger Dünger in Form einer Ammoniumsalzlösung aus einer ersten Verdampferstufe entnehmbar ist und / oder der streufähige Dünger der zweiten Verdampferstufe mit dem flüssigen Dünger - nämlich einer Ammoniumsalzlösung - der ersten Verdampferstufe kombinierbar ist, wobei in den Verdampfern mittels angelagerter Vakuumerzeugungsstufen Unterdrücke steuerungstechnisch in unterschiedlicher Höhe gezielt - bemessen an den Temperaturen des Gärrestes, der Konzentrate und Kondensate - einzustellen sind, damit die Prozesse der Verdampfung und Kondensation auch bei Temperaturen von weniger als 80°C in den Reaktionsgefäßen stattfinden, wobei insbesondere zwei Wärmetauscher in den Prozessablauf eingebunden werden sollen.

Die Aufgabe der Erfindung wird wie folgt gelöst, wobei hinsichtlich der grundlegenden erfinderischen Gedanken auf die Patentansprüche 1 und 7 verwiesen wird.

Die weitere Ausgestaltung der Erfindung erfolgt gemäß den Ansprüchen 2 bis 6 sowie 8 und 9.

Weitere Hinweise zur erfinderischen Lehre sind erforderlich.

Erfindungsgemäß findet das Verfahren in mindestens zwei aufeinanderfolgenden Verdampferstufen mit einer zwischen diesen geschalteten Kondensatstufe statt. Es ist dabei jedoch denkbar, dass auch weitere Verdampferstufen nebst jeweils einer mit ihnen in Wirkverbindung stehenden Kondensatstufe, die als Wärmetauscher ausgebildet ist, miteinander verfahrenstechnisch verknüpft werden können. Die Beschickung einer ersten Verdampferstufe mit einem Verdampferkessel I, in welchem zu Beginn Wasser enthalten ist, mit Ammoniumsalzlösung erfolgt einerseits über einen mit der ersten Verdampferstufe im Kreislauf laufenden Wärmetauscher I, wobei eine Ergänzung eingedampfter Lösung in der ersten Verdampferstufe über einen externen Zulauf (Puffer) erfolgt. Die Pufferlösung besteht dabei in ihren Bestandteilen aus Ammoniak, Wasser und einer anorganischen Säure, sodass hieraus in bekannter Weise durch chemische Umsetzung eine schwach angesäuerte Ammoniumsalzlösung zur Verfügung steht. Der Wärmetauscher I, der vor der ersten Verdampferstufe in das Verfahren eingebunden ist und es mit temperierter Ammoniumsalzlösung versorgt, erhält Heißwasser aus einem mit ihm verbundenen Blockheizkraftwerk (BHKW) einer Biogasanlage, wobei die Eintrittstemperatur desselben bei ca. 90°C und seine Austrittstemperatur bei ca. 70°C liegt. Die Ammoniumsalzlösung, die aus dem Kreislauf der ersten Verdampferstufe abgepumpt, mit Überdruck über den Wärmetauscher I gedrückt und wieder in die erste Verdampferstufe durch Versprühung eingebracht wird, erfährt hier eine zunehmende Verdampfung mittels eines auf einem definierten Niveau gehaltenen Vakuums, wobei der sich im Dom des Verdampferkessels I ansammelnde Dampf, insbesondere Sattdampf von ca. 35°C bis 90°C, über einen zweiten Wärmetauscher II geleitet und als Kondensat in einem Kondensatbehälter für die erste Verdampferstufe gesammelt wird. Dieses Kondensat wird aus dem Prozess genommen.

Die sich am Kesselboden des Verdampferkessels I der ersten Verdampferstufe kontinuierlich zunehmend aufkonzentrierende Ammoniumsalzlösung wird von dort nach außen ausgetragen.

Die auf niedrigerem Temperaturniveau arbeitende zweite Verdampferstufe mit dem Verdampferkessel II ist mit Gärrest bis zu einem festgelegten Arbeitsniveau befüllt und es herrscht hier ein höheres Vakuum, erzeugt durch eine ihm zugeordnete Vakuumerzeugungsstufe II, damit der flüssige im Kreislauf über den Wärmetauscher II umgepumpte und wieder in den Verdampferkessel II versprühte Gärrest zunehmend eingedickt wird.

Der vorgenannte streufähige Dünger ist ohne Geruchsbildung auf landwirtschaftliche Nutzflächen ausbringbar.

Das im Verdampferkessel II entstehende Kondensat enthält Wasser und Ammoniak und es wird für die weitere Behandlung im dieser Stufe zugeordneten Kondensatbehälter aufgefangen. Um Stickstoffverbindungen zu stabilisieren und das flüchtige Ammoniak in der Lösung zu binden, wird unter Zugabe einer anorganischen Säure der pH-Wert von ca. dauernd <6 eingestellt. Diese nun noch sehr "dünne" Salzlösung gelangt von hier aus in den Verdampferkessel I und wird dort auf die gewünschte Konzentration von bis zu 40% gebracht.

Eine Einrichtung zur Realisierung des Verfahrens besteht aus mindestens zwei oder mehr Verdampferstufen mit dazugehörigen Kondensatstufen, wobei einer ersten Verdampferstufe mit einem Verdampferkessel I ein erster Wärmetauscher I zugeordnet ist, der durch Kühlwasser eines Blockheizkraftwerkes aus einer Biogasanlage beaufschlagt ist. Ein zwischen der ersten Verdampferstufe und einer nachfolgenden zweiten Verdampferstufe positionierter zweiter Wärmetauscher II fungiert hier als Kondensatstufe I für den aus dem Dom des Verdampferkessels I entnehmbaren Sattdampfes, wobei er sich - analog wie die Zuordnung de Wärmetauschers I zum Verdampferkessel I - im Kreislauf arbeitend in der Zuordnung mit dem Verdampferkessel II der zweiten Verdampferstufe befindet. Innerhalb des Verdampferkessels II befindet sich in dessem Dom ein in vorteilhafter Weise mit ihm kombinierter dritter Wärmetauscher, sodass aus diesem Reaktionsgefäß (Verdampferkessel II) entstehendes Kondensat ammoniakfrei, klar und unbelastet in einem dem Verdampferkessel II nachfolgenden Kondensatbehälter für die zweite Verdampferstufe auffangbar ist und zur Aufbereitung der Pufferlösung für die erste Verdampferstufe in einem Pufferbehälter deponiert wird. Der vorgenannte dritte Wärmetauscher ist mit dem Kreislauf einer Rückkühlung verbunden. Zur Einstellung der unterschiedlichen Siedetemperaturen der flüssigen Ammoniumsalzlösung im Verdampferkessel I der ersten Verdampferstufe und des flüssigen Gärrests im Verdampferkessel II der zweiten Verdampferstufe stellen jeweils den Verdampfungsstufen zugeordnete Vakuumerzeugungsstufen I und II unterschiedlich hohe Vakuen her, sodass auch bei Temperaturen unter 80°C Verdampfungs- und Eindickungsvorgänge beförderbar sind.

Zwischen den vorgenannten Vakuumerzeugungsstufen Stufe I und Stufe II und den Kondensatbehältern der Stufen I und Stufen II sind weitere Elemente angeordnet, wie eine niveauregulierte Treibwasservorlage, Vakuumpumpen, eine Flüssigkeitsstrahlpumpe und Vakuumhalteventile.

Die Erfindung soll nachfolgend anhand eines Ausführungsbeispiels näher erläutert werden. In einzelnen Figuren wird das Verfahren schematisch dargestellt.

Die Figuren zeigen:
Figur 1: Erster Verdampferkessel I mit einem mit ihm in Wirkverbindung stehenden Wärmetauscher I
Figur 2: Zweiter Verdampferkessel II und Vakuumerzeugung Stufe I
Figur 3: Kondensatbehälter Stufe II, Vakuumerzeugung Stufe II, Pufferbehälter u.a.

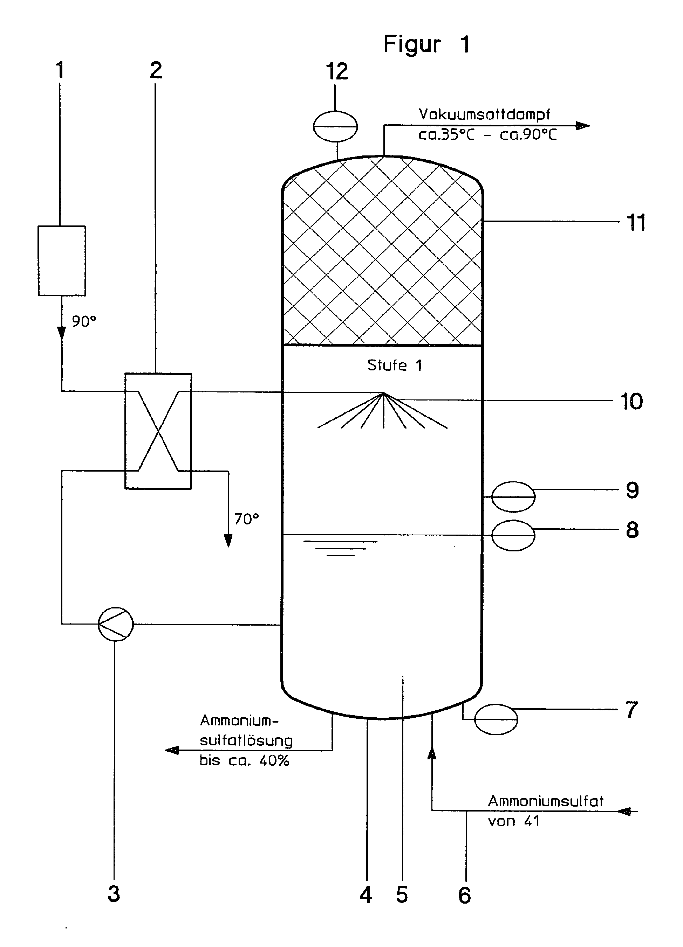

Figur 1 zeigt zunächst eine erste Verdampferstufe mit einem Verdampferkessel I, 4, der von einem Wärmetauscher I, 2 mit temperierter Ammoniumsalzlösung 5 und parallel dazu auch mittels eines Zulaufes 6 mit dieser versorgt wird. Das Flüssigkeitsniveau im Verdampferkessel I, 4 wird mittels einer Niveauüberschreitung 9, eines Arbeitsniveaus 8 oder einer Niveauunterschreitung 7 kontrolliert, was auch in der zweiten Verdampferstufe mit dem Verdampferkessel II, 36 erfolgt.

Die aus dem Wärmetauscher I, 2 abgenommene Salzlösung besitzt eine Vorlaufstemperatur von ca. 90°C und wird oberhalb des Flüssigkeitsspiegels im Verdampferkessel I, 4 mittels einer Düse 10 versprüht. Infolge eines mittels einer Vakuumerzeugung Stufe I, 26 aufrechterhaltenen Vakuums, welches über den Wärmetauscher II, 13 in den Verdampferkessel I, 4 hineinwirkt, setzt eine Dampfbildung in letzterem ein - auch unterhalb des eigentlichen Siedepunktes einer z. B. Ammoniumsalzlösung 5 - , wobei der sich im Dom 11 sammelnde, insbesondere Sattdampf von z. B. 60°C im Wärmetauscher II, 13 als Kondensat niederschlägt, welches in einem Kondensatbehälter 15 für die erste Verdampferstufe aufgefangen wird. Der Dampf schlägt sich hier als Kondensat nieder, da kühleres Konzentrat (Gärrestflüssigkeit 29) der zweiten Verdampferstufe aus dem Verdampferkessel II, 36 als "Kühlwasser" aus diesem entnommen wird und im Kreislauf über eine Düse 32 erneut in ihm versprüht wird.

Ein Vakuum für den Verdampferkessel II, 36, welches ein höheres Niveau als im Verdampferkessel I, 4 aufweist, wird innerhalb einer Vakuumerzeugung Stufe II, 45 erzeugt.

Die in den Dom des Verdampferkessels II, 36 aufsteigenden Brüden werden in einem Kühlkreislauf, bestehend aus einem Wärmetauscher 34 und einem Rückkühler 49 zur Kondensation gebracht und im Kondensatbehälter Stufe II, 37 aufgefangen und in einen Pufferbehälter 41 zur Aufbereitung einer Ammoniumsalzlösung geleitet. Hier wird das Kondensat mit einer anorganischen Säure, bevorzugt H₂SO₄ oder denkbar ist auch H₃PO₄, versetzt und es gelangt die so hergestellte Pufferlösung zur Aufkonzentration in die erste Verdampferstufe. Das Konzentrat des Verdampferkessels II, 36, welches schließlich als streufähiger Gärrest 27 vorliegt, kann verfahrensgemäß dem Konzentrat (z. B. einer Ammoniumsulfatlösung) aus dem Verdampferkessel I, 4 zugemischt werden.

Der Wärmefluss in den Verdampferkessel II, 36 vollzieht sich über die abgegebene Kondensationswärme des Kondensates im Wärmetauscher II, 13. Aufgrund des geringeren Temperaturniveaus in der zweiten Verdampferstufe, im Vergleich zur ersten, wird im Verdampferkessel II, 36 ein höheres Vakuum vorgehalten. Die eingestellten Unterdrücke in der ersten und in der zweiten Verdampferstufe liegen dabei zwischen 200 bzw. 500 mbar.

Es bleibt zu erwähnen, dass die das Verfahren initiierende Wärme aus einem Blockheizkraftwerk (BHKW) 1 einer Biogasanlage entnommen und von dem Wärmetauscher I, 2 abgenommen wird. Die verwendete Eintrittstemperatur einer Wärmeträgerflüssigkeit liegt bevorzugt beim Wärmetauscher I, 2 bei 90°C und die Austrittstemperatur bei 70°C, um einen optimalen Wirkungsgrad zu erzielen. Jedoch können auch niedrigere Temperaturen gefahren werden. Dazu müssen die entsprechenden Vakuen der ersten und zweiten Verdampferstufe angepasst, d. h. erhöht werden.

Die in der ersten Verdampferstufe sich fortlaufend im Kreislauf aufkonzentrierende z. B. Ammoniumsulfatlösung kann eine Konzentration von bis zu 40% erreichen.

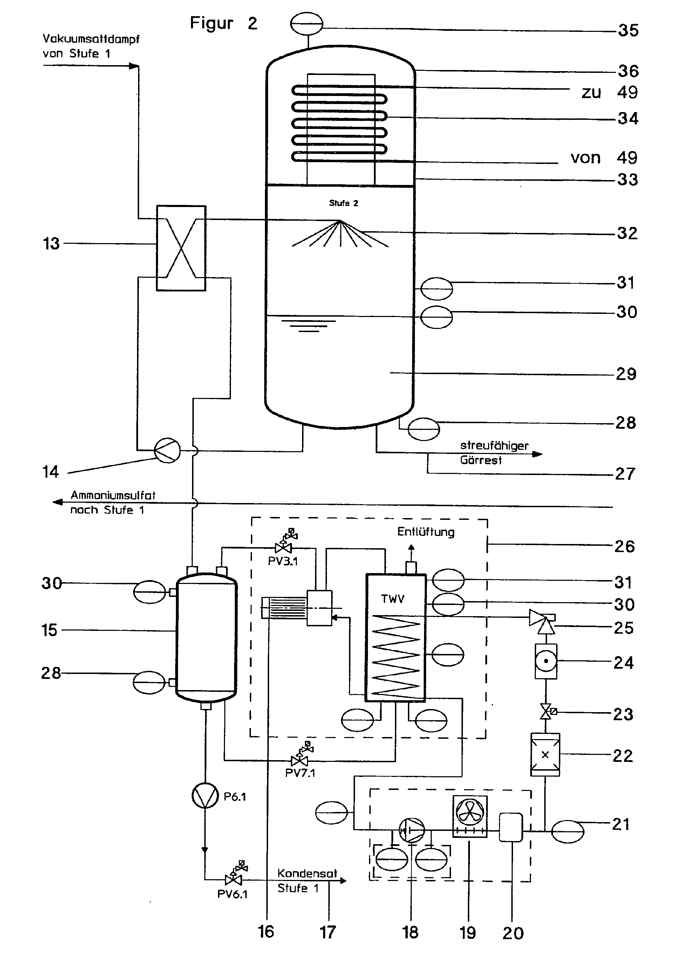

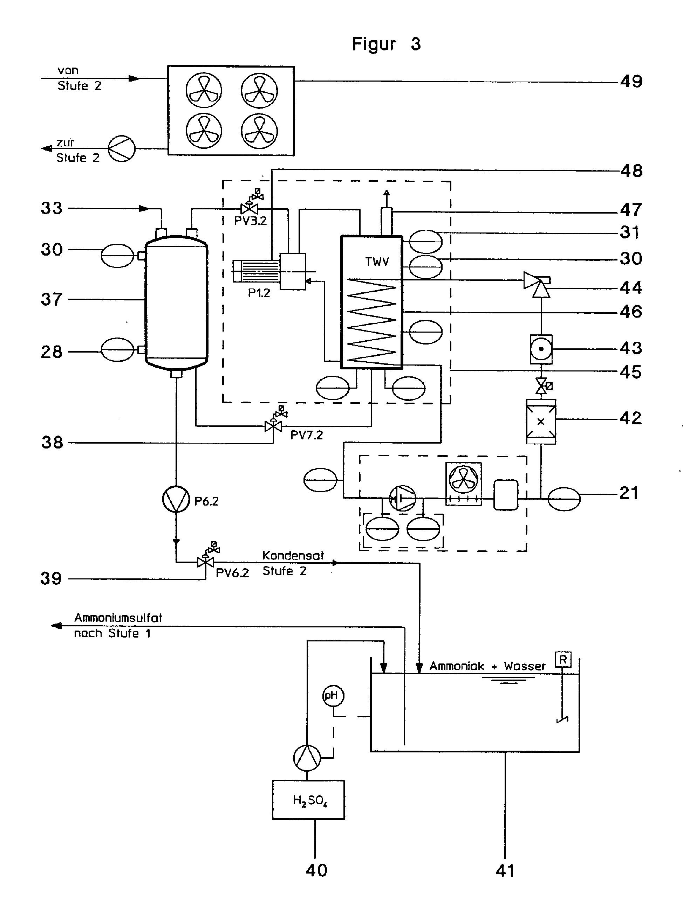

In weiterer Betrachtung gemäß der Figuren 2 und 3 wird deutlich, dass die erfindungsgemäße Einrichtung zur Realisierung des Verfahrens beispielsweise zweistufig ausgelegt ist. Ein Verdampferkessel I, 4 - im Kreislauf mit einem Wärmetauscher I, 2 befindlich - steht mit einem zweiten Verdampferkessel II, 36 in Wirkverbindung, wobei eine Vakuumerzeugung Stufe I, 26 ein Vakuum für die erste und eine Vakuumerzeugung Stufe II, 45 ein Vakuum für die zweite Verdampferstufe bereitstellt. Ein Wärmetauscher II, 13 ist zwischen der ersten Verdampferstufe und der zweiten geschaltet, wobei er die Funktionen der Weiterleitung abgekühlten Kondensates des Verdampferkessels I, 4 in einen Kondensatbehälter 15 der ersten Verdampferstufe und der Wiedereinleitung des Konzentrates (Gärrestflüssigkeit 29) aus dem Verdampferkessel II, 36, letzteres zu dessen weiterer Aufkonzentrierung, bis zur Erzielung eines streufähigen Düngers, erfüllt.

Ein Kondensatbehälter Stufe II, 37 ist dem Verdampferkessel II, 36 zugeordnet, wobei beide mittels der Vakuumerzeugung Stufe II, 45 mit einem definierten Vakuum beaufschlagt sind.

Wesentliche Vorteile der Erfindung sind:
- da Ammoniak verfahrensgemäß ausgewaschen wird, ist keine Geruchsbelästigung mehr bei landwirtschaftlicher Düngung gegeben,
- Konzentrate der Verdampferstufen I und II sind getrennt oder in definierter Mischung auf Feldern ausbringbar und sie stellen einen handelsüblichen Dünger dar,
- Reduzierung nicht verwerteter Gärreste aus Biogasanlagen um ca. 60% und damit entsprechend verminderte Aufwendungen für deren Abtransport,
- Einsparung fossiler Brennstoffe, da z. B. eine 500 kW Biogasanlage etwa 12.000 t Gärrest im Jahr erbringt
- Dadurch, dass der Temperaturenunterschied zwischen Gärrest und Dampf in der ersten Verdampferstufe so gering wie möglich gehalten wird gelingt es, dass die Verunreinigung der Flächen des Wärmetauschers der ersten Verdampferstufe vernachlässigbar klein bleiben.

### Bezugszeichenliste

- 1 -: Blockheizkraftwerk (BHKW)
- 2 -: Wärmetauscher I
- 3 -: Pumpe
- 4 -: Verdampferkessel I
- 5 -: Ammoniumsalzlösung
- 6 -: Zulauf
- 7 -: Niveauunterschreitung
- 8 -: Arbeitsniveau
- 9 -: Niveauüberschreitung
- 10 -: Düse
- 11 -: Dom
- 12 -: Druckmessgerät
- 13 -: Wärmetauscher II
- 14 -: Pumpe
- 15 -: Kondensatbehälter
- 16 -: Vakuumpumpe
- 17 -: Kondensatabzug
- 18 -: Kompressor (Neben-)
- 19 -: Ventilator (Neben-)
- 20 -: Sammler
- 21 -: Hochdrucküberwachung
- 22 -: Filtertrockner
- 23 -: Magnetventil
- 24 -: Schauglas
- 25 -: Einspritzventil (elektronisch)
- 26 -: Vakuumerzeugung Stufe I
- 27 -: Gärrest
- 28 -: Niveauunterschreitung
- 29 -: Gärrestflüssigkeit
- 30 -: Arbeitsniveau
- 31 -: Niveauüberschreitung
- 32 -: Düse
- 33 -: Kondensatabzug (Stufe II)
- 34 -: Rohrspiralwärmetauscher
- 35 -: Druckmessgerät
- 36 -: Verdampferkessel II
- 37 -: Kondensatbehälter Stufe II
- 38 -: Treibwasserübergangsventil
- 39 -: Vakuumhalteventil
- 40 -: Säuredepot
- 41 -: Pufferbehälter
- 42 -: Filtertrockner
- 43 -: Schauglas
- 44 -: Einspritzventil (elektronisch)
- 45 -: Vakuumerzeugung Stufe II
- 46 -: Treibwasservorlage
- 47 -: Entlüftung
- 48 -: Vakuumpumpe
- 49 -: Rückkühler

## Patentansprüche

1. Verfahren zur Düngemittelproduktion aus Gärrest, anfallend in Biogasanlagen in einer mindestens zweistufigen Verdampferanlage, wobei in einen Verdampferkessel I (4), anfangs Wasser enthaltend, eine Ammoniumsalzlösung (5), beaufschlagt mit einer definierten Temperatur aus einem Wärmetauscher I (2), und Ammoniumsalzlösung (5) ohne Temperierung über einen Zulauf (6) eingeleitet wird, dabei eine Vakuumerzeugungsstufe I (26) den zum Sieden und Aufkonzentrieren der Ammoniumsalzlösung (5) erforderlichen Unterdruck im Verdampferkessel I (4) bereitstellt und eine nachfolgende Kondensation des aus dem Verdampferkessel I (4) austretenden und in den Wärmetauscher II (13) eingeleiteten Sattdampfes durchgeführt wird, wobei das aus dem Wärmetauscher II (13) gewonnene Kondensat in einen der ersten Verdampferstufe zugeordneten Kondensatbehälter (15) gesammelt und von dort aus dem Prozess genommen wird und in einem zweiten Verdampferkessel II (36), der mit einem Vakuum aus der Vakuumerzeugung Stufe 11 (45) beaufschlagt wird und in welchem Gärrestflüssigkeit (29) auf niedrigerem Temperaturniveau sowie bei höherem Vakuum als im Verdampferkessel I (4) zunehmend, bis zur Auskristallisation am Kesselboden des Verdampferkessels II (36), eingedickt wird, wobei fortlaufend eine auf Arbeitsniveau (30) gehaltene Gärrestflüssigkeit (29) im Kreislauf über den Wär-metauscher II (13) gedrückt und wieder über eine Düse (32) im Verdampferkessel II (36) versprüht wird und der in letzterem anfallende Dampf in Kontakt mit einem im Verdampferkessel II (36) integrierten Rohrspiralwärmetauscher (34) tritt und dabei anfallendes Kondensat - über einen Kondensatabzug (33) geleitet - in einem Kondensatbehälter Stufe II (37) gesammelt und zur Aufbereitung einer Pufferlösung mit einer anorganischen Säure zur Einhaltung eines PH-Wertes von dauernd 6 vermischt und in einen Pufferbehälter (41) geführt wird, der über den Zulauf (6) mit dem Verdampferkessel I (4) der ersten Verdampferstufe in Wirkverbindung steht.

2. Verfahren zur Düngemittelproduktion aus Gärrest nach Anspruch 1, **gekennzeichnet dadurch, dass** zur Aufbereitung der Pufferlösung, die im Pufferbehälter (41) deponiert ist, H₂SO₄verwendet wird.

3. Verfahren zur Düngemittelproduktion aus Gärrest nach Anspruch 1, **gekennzeichnet dadurch, dass** die dem Verdampferkessel I (4) entnommene, bis etwa 40% aufkonzentrierte Ammoniumsalzlösung (5) und der aus dem Verdampferkessel II (36) als streufähiger, fester Dünger ausgetragene Gärrest (27) entweder jeweils für sich allein oder in ihrer gemeinsamen Vermischung auf Nutzflächen der Landwirtschaft ausgebracht werden.

4. Verfahren zur Düngemittelproduktion aus Gärrest nach einem der vorgenannten Ansprüche, **gekennzeichnet dadurch, dass** der Wärmetauscher I (2) mit Kühlwasser aus einem Blockheizkraftwerk (1) durchströmt wird, wobei dessen Eintrittstemperatur bei ca. 90°C und dessen Austrittstemperatur bei ca. 70°C liegt.

5. Verfahren zur Düngemittelproduktion aus Gärrest nach Anspruch 1, **gekennzeichnet dadurch, dass** die in der ersten Verdampferstufe und der zweiten Verdampferstufe temperaturabhängig einstellbaren Betriebsvakuen zwischen 200 und 500 Millibar einreguliert werden.

6. Verfahren zur Düngemittelproduktion aus Gärrest nach Anspruch 1, **gekennzeichnet dadurch, dass** die aus dem Rückkühler (49) gewonnene Abwärme zur weiteren Trocknung des Konzentrats aus dem Verdampferkessel II (36) genutzt wird.

7. Einrichtung zur Realisierung des Verfahrens gemäß Anspruch 1, **gekennzeichnet dadurch, dass** eine erste Verdampferstufe mit einem Verdampferkessel I (4), dem eine Vakuumerzeugung Stufe I (26) zugeordnet ist, einerseits mit einem Wärmetauscher I (2) und andererseits über einen Wärmetauscher II (13) mit einer zweiten Verdampferstufe gekoppelt ist, die einen Verdampferkessel (36) mit einer Düse (32) darstellt, dem eine Vakuumerzeugung Stufe II (45) zugeordnet ist, wobei der Wärmetauscher II (13) als Kondensator des Sattdampfes der ersten Verdampferstufe fungiert und der Wärmetauscher II (13) mit einem Kondensatbehälter (15) in Verbindung steht sowie innerhalb des Verdampferkessels II (36) ein Rohrspiralwärmetauscher (34) vorhanden ist, dem zur Speicherung anfallenden Kondensats ein Kondensatbehälter Stufe II (37) beigeordnet ist und der schließlich mit einem Pufferbehälter (41) in Wirkverbindung steht, der über einen Zulauf (6) mit dem Verdampferkessel I (4) verbunden ist.

8. Einrichtung nach Anspruch 7, **gekennzeichnet dadurch, dass** mindestens 2, jedoch auch mehr Verdampfer- / Kondensatstufen nebst dazugehörigen Vakuumerzeugungen miteinander gekoppelt sein können.

## Claims

1. A method for producing fertilizer from digestate generated in biogas plants in an at least two-stage evaporator system, wherein an ammonium salt solution (5), charged with a defined temperature from a heat exchanger I (2), and an ammonium salt solution (5) without a specific temperature are added via a feed (6) into an evaporator tank I (4) which initially contains water, while a vacuum generation stage I (26) provides the reduced pressure required in the evaporator tank I (4) for boiling and increasing the concentration of the ammonium salt solution (5) and a subsequent condensation of the saturated vapour(s.u.) which exits from the evaporator tank I (4) and is fed into the heat exchanger II (13) takes place, wherein the condensate obtained from the heat exchanger II (13) is collected in a condensate container (15) which is assigned to the first evaporator stage and from there is removed from the process, and in a second evaporator tank II (36), which is charged with a vacuum from the vacuum generation stage II (45) and in which digestate fluid (29) is thickened at a lower temperature level and at a higher vacuum level than in the evaporator tank I (4) to an increasing degree until it is crystallized out on the tank bottom of the evaporator tank II (36), wherein on a continuous basis, a digestate fluid (29) which is maintained at an operating level (30) is pressed in the cycle over the heat exchanger II (13) and is again sprayed via a nozzle (32) in the evaporator tank II (36) and the vapour which is generated in said evaporator tank II comes into contact with a pipe spiral heat exchanger (34) which is integrated in said evaporator tank II (36) and condensate which is generated during this process - guided via a condensate extractor (33) - is collected in a condensate container stage II (37) and, in order to prepare a buffer solution, is mixed with an inorganic acid for maintaining a constant pH value of 6 and is fed into a buffer container (41) which is operatively connected to the evaporator tank I (4) of the first evaporator stage via the feed (6).

2. The method for producing fertilizer from digestate according to claim 1, **characterized in that**, in order to prepare the buffer solution which is stored in the buffer container (41), H₂SO₄ is used.

3. The method for producing fertilizer from digestate according to claim 1, **characterized in that** the ammonium salt solution (5) which is removed from the evaporator tank I (4) and the concentration of which is increased to approximately 40% and the digestate (27) which is withdrawn from the evaporator tank II (36) as a spreadable, solid fertilizer are applied either separately or mixed together on productive agricultural land.

4. The method for producing fertilizer from digestate according to any one of the preceding claims, **characterized in that** cooling water from a combined heat and power plant (1) is passed through the heat exchanger I (2), wherein the temperature of said water on entry is approx. 90°C and on exit is approx. 70°C.

5. The method for producing fertilizer from digestate according to claim 1, **characterized in that** the operating vacuums in the first evaporator stage and the second evaporator stage, which are adjustable depending on the temperature, are set to between 200 and 500 millibars.

6. The method for producing fertilizer from digestate according to claim 1, **characterized in that** the waste heat obtained from the cooler (49) is used for further drying the concentrate from the evaporator tank II (36).

7. A device for realising the method according to claim 1, **characterized in that** a first evaporator stage with an evaporator tank I (4), to which a vacuum generation stage I (26) is assigned, is coupled on the one hand with a heat exchanger I (2) and on the other, via a heat exchanger II (13), with a second evaporator stage, which is an evaporator tank II (36) with a nozzle (32), to which a vacuum generation stage II (45) is assigned, wherein the heat exchanger II (13) acts as a condenser of the saturated vapour from the first evaporator stage and the heat exchanger II (13) is connected to a condensate container (15) and within the evaporator tank II (36) a pipe spiral heat exchanger (34) is provided to which a condensate container stage II (37) is assigned for storing condensate which is generated and which is finally operatively connected to a buffer container (41) which is connected to the evaporator tank I (4) via a feed (6).

8. The device according to claim 7, **characterized in that** at least 2 but also more evaporator/condensate stages can be coupled to each other alongside associated vacuum generation stages.

## Revendications

1. Procédé de production d'engrais à partir de résidus de fermentation survenant sur des installations de biogaz dans une installation d'évaporation à au moins deux étapes, une solution de sel d'ammonium (5) étant portée à une température définie d'un échangeur de chaleur I (2) et une solution de sel d'ammonium (5) sans régulation de température étant amenées par une arrivée (6) dans une chaudière d'évaporation I (4) contenant initialement de l'eau, un étage de génération de vide I (26) générant dans la chaudière d'évaporation I (4) la dépression nécessaire à l'ébullition et à la concentration de la solution de sel d'ammonium (5), et une condensation subséquente de la vapeur saturée sortant de la chaudière d'évaporation I (4) et amenée dans l'échangeur de chaleur II (13) étant effectuée, le condensat produit par l'échangeur de chaleur II (13) étant collecté dans un récipient à condensat (15) attribué au premier étage d'évaporation et ôté du processus à partir de là, et dans un deuxième étage d'évaporation II (36), lequel est mis sous vide par l'étage II de génération de vide (45), et dans lequel du liquide de résidus de fermentation (29) à un niveau de température inférieur ainsi que pour un vide plus important que dans la chaudière d'évaporation I (4) étant épaissi de façon croissante, jusqu'à la cristallisation sur le fond de la chaudière d'évaporation II (36), un liquide de résidus de fermentation (29) maintenu à un niveau de travail (30) étant continuellement pressé dans le circuit par l'échangeur de chaleur II (13) et de nouveau pulvérisé dans la chaudière d'évaporation II (36) par un injecteur (32), et la vapeur survenant dans cette dernière entrant en contact avec un échangeur de chaleur à tube spiralé (34) intégré dans la chaudière d'évaporation II (36) et le condensat se produisant à cette occasion - conduit par un canal de condensat (33) - étant collecté dans un étage de récipient à condensat II (37) et, pour la préparation d'une solution tampon, mélangé avec un acide inorganique pour le maintien d'une valeur de pH constante de 6 et amené dans un récipient tampon (41), lequel se trouve en relation active avec la chaudière d'évaporation I (4) du premier étage d'évaporation, par l'arrivée (6).

2. Procédé de production d'engrais à partir de résidus de fermentation selon la revendication 1, **caractérisé en ce que**, pour le maintien de la solution tampon déposée dans le récipient tampon (41), du H₂SO₄ est utilisé.

3. Procédé de production d'engrais à partir de résidus de fermentation selon la revendication 1, **caractérisé en ce que** la solution de sel d'ammonium (5) ôtée de la chaudière d'évaporation I (4) concentrée jusqu'à environ 40 % et les résidus de fermentation (27) extraits de la chaudière d'évaporation II (36) comme engrais solide épandable sont épandus soit chacun pour soit séparément, ou comme mélange des deux sur des surfaces utiles agricoles.

4. Procédé de production d'engrais à partir de résidus de fermentation selon l'une des revendications précédentes, **caractérisé en ce que** l'échangeur de chaleur I (2) est traversé par de l'eau de refroidissement d'une centrale de chauffage à distance (1), sa température d'arrivée étant environ de 90 °C et sa température de sortie étant environ de 70 °C.

5. Procédé de production d'engrais à partir de résidus de fermentation selon la revendication 1, **caractérisé en ce que** les vides de fonctionnement réglables en fonction de la température dans le premier étage d'évaporation et le deuxième étage d'évaporation sont réglés entre 200 et 500 millibars.

6. Procédé de production d'engrais à partir de résidus de fermentation selon la revendication 1, **caractérisé en ce que** la chaleur perdue générée par l'aéro-réfrigérant (49) est utilisée pour le séchage ultérieur du concentré de la chaudière d'évaporation II (36).

7. Installation pour la réalisation du procédé conformément à la revendication 1, **caractérisée en ce qu'**un premier étage d'évaporation avec une chaudière d'évaporation I (4), à laquelle un étage de génération de vide I (26) est attribué, est couplé d'une part avec un échangeur de chaleur I (2) et d'autre part avec un échangeur de chaleur II (13) avec un deuxième étage d'évaporation, lequel représente une chaudière d'évaporation II (36) avec un injecteur (32), à laquelle est attribué un étage de génération de vide II (45), l'échangeur de chaleur II (13) fonctionnant comme condensateur de vapeur saturée du premier étage d'évaporation et l'échangeur de chaleur II (13) étant en relation avec un récipient à condensat (15), et un échangeur de chaleur à tube spiralé (34) se trouvant dans la chaudière d'évaporation II (36), auquel un étage de récipient à condensat II (37) est attribué et étant enfin en relation active avec un récipient tampon (41), lequel est relié à la chaudière d'évaporation I (4) par une arrivée (6).

8. Installation selon la revendication 7, **caractérisée en ce qu'**au moins 2, mais aussi plus d'étages d'évaporation/condensat peuvent être couplés les uns aux autres, avec les générateurs de vide correspondants.
